Europäisches Patentamt

(19) European Patent Office    (11) Publication number: **0 088 057**
Office européen des brevets    **B1**

(12)    **EUROPEAN PATENT SPECIFICATION**

(45) Date of publication of patent specification: **20.08.86**    (51) Int. Cl.⁴: **F 16 L 1/02**

(21) Application number: **83850010.6**

(22) Date of filing: **19.01.83**

---

(54) A pipelaying appliance.

---

(30) Priority: **22.01.82 SE 8200365**

(43) Date of publication of application:
**07.09.83 Bulletin 83/36**

(45) Publication of the grant of the patent:
**20.08.86 Bulletin 86/34**

(84) Designated Contracting States:
**AT BE CH DE FR GB IT LI NL**

(56) References cited:
**Patent Abstracts of Japan, vol. 1, no. 144, 24
November 1977, page 5177M77**

**Soviet Inventions Illustrated, Week D 40, 11
November 1981, Section Q 38**

**Soviet Inventions Illustrated, Week E 09, 14
April 1982, Section Q 38**

(73) Proprietor: **Sonerud, John Teodor
Vintervägen 30
S-824 00 Hudiksvall (SE)**

(72) Inventor: **Sonerud, John Teodor
Vintervägen 30
S-824 00 Hudiksvall (SE)**

(74) Representative: **Forsheden, Jarl Ragnar et al
L.A. Groth & Co. AB Västmannagatan 43
S-113 25 Stockholm (SE)**

---

Courier Press, Leamington Spa, England.

## Description

Technical Field

The present invention relates to a pipelaying appliance connected to a raisable and lowerable apparatus such as an excavator or a crane, and including a gripping means for removable engagement with a pipe.

Background Art

In pipelaying different types of gripping scissors are used for holding the pipe, these scissors hanging freely in slings or on the safety hook of an excavator. These gripping scissors must be manually coupled up to, and uncoupled from the excavator, and manual work is also required to connect the scissors to, and remove them from the pipes. The manual connection is done by a person standing on the ground, and the aligning of a pipe in the pipe trench and the removal of the gripping scissors is carried out by this person when he has got down into the trench. After having joined the pipe to a previously laid pipe with the aid of a special lever means, the person gets up out of the trench again and releases the scissors from the excavator so that the latter can continue with excavation.

This procedure is both time-consuming, laborious and uneconomical. Furthermore there are large accident risks, since the heavy pipes can sway unchecked during the movement to, and lowering into the pipe trench.

Through Soviet Inventions Illustrated Week D 40, 11 November 1981, Section Q 38 & SU—A—796 153, Soviet Inventions Illustrated Week E 09, 14 April 1982, Section Q38 & SU—A—831 708, Derwent's abstract No. A 1585 B/01 SU 592715, Swedish laid-open print No. 415 247 and German patent No. 952 558 there are also known gripping devices for different objects to be lifted and transferred, each device including a first and a second member, one on each side of the object, these members being movable to and from each other and connected to a raisable and lowerable apparatus so that the clamping force provided by the members on the object will be proportional to the weight of the object carried by the gripping device.

If the last mentioned gripping devices at all can be used for handling pipes they are burdened with the same disadvantages as those of the gripping scissors described above. Also, they are complicated in design.

Disclosure of Invention

The object of the present invention is to do away with the disadvantages burdening previously known gripping devices and to provide an uncomplicated and reliable pipelaying appliance for gripping a pipe, the machine operator himself being able to couple the appliance to, and uncouple it from the machine, perform the necessary operations himself for gripping a pipe, take it down into an excavated trench, e.g. one parallel to or right angles to the excavating direction, align the pipe in the trench and thereafter release the pipe.

This object is achieved by the invention being given the characterizing features disclosed in the claims.

Description of Figures

Figure 1 is a schematic side view of a pipelaying appliance in accordance with the invention, connected to an excavation bucket provided with a gripping means and in position for gripping a cement pipe, and

Figure 2 is a side view similar to the one in Figure 1 but with the appliance gripping and lifting the cement pipe.

Preferred Embodiment

The appliance 1 illustrated in the Figures is intended to be gripped by a gripping means mounted on a raisable and lowerable apparatus, e.g. a crane or an excavator of the kind illustrated in SE—B—411467. In the Figures, the raisable and lowerable apparatus is illustrated in the form of a portion of the mentioned excavator bucket 2 with a gripping means 3 comprising two fingers movable to and away from each other which are pivotably mounted on the back of the bucket.

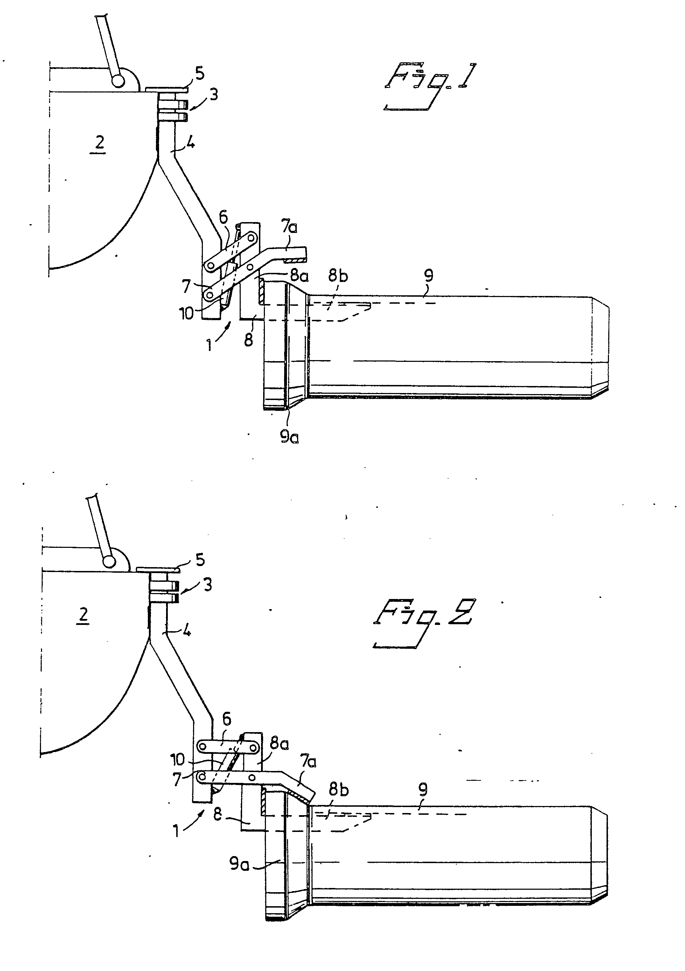

The appliance 1 comprises a bar or upright 4 suitably provided with a circular crossection, which can be gripped by the gripping means 3, independent of how the upright is rotated round its longitudinal axis, the bar being provided with an upper plate 5 intended to engage with a portion thereof against the upper surface of the bucket 2 to prevent the appliance from sliding downwards between the fingers 3 when the appliance carries a heavy pipe. At the lower portion of the upright 4, projecting somewhat farther from the bucket 2 than the upper portion thereof, so that the machine operator will be able to see the remaining part of the appliance better during pipelaying, there are pivotably mounted the first ends of a link 6 and a gripping arm 7. The other end of the link 6 and an intermediate portion of the gripping arm 7 are pivotably mounted in the vertical arm 8a of an L-shaped gripping arm 8. The four journalling points constitute the corners in a parallelogram formed by the details just described, this parallelogram being variable between the shapes illustrated in Figures 1 and 2. The horizontal arm 8b of the gripping arm 8 and the somewhat downwardly angled right-hand portion 7a of the gripping arm 7 form the jaws in the means gripping a cement pipe 9.

A spring means, suitably a so-called gas spring 10, is piviotably mounted on, and extends between the lower portion of the upright 4 and the upper part of the arm 8a. The pressing force in the spring 10 is somewhat greater than the sum of the weight of the link 6, arm 7 and arm 8, so as to keep the jaws 7a and 8a in the open position illustrated in Figure 1.

When a length of trench in which it is intended to lay cement piping is excavated by the bucket 2, the bucket is manoeuvered by the machine operator so that it is moved to the appliance 1, lying or upright on the ground at the side of the trench, the gripping means 3 then being opened and caused to surround and grip the upright 4 of the appliance, the bucket then being lifted and turned so that it and the appliance assume the attitude illustrated in Figure 1. The appliance 1 is then aligned so that the arm 8b of the gripping arm 8 is inserted in the end of the cement pipe 9 having an enlarged flange 9a, and the gripping arm portion 7a is moved to a position on the outside of the pipe opposite the arm 8b. The arm 8b is inserted into the pipe until a rubber-covered portion of the arm 8a comes against the flange 9a.

The bucket 2 is now raised, whereon the arm 8b is lifted into contact with the inner wall of the pipe 9 and is pressed against it, the spring means 10 thus being compressed by a force corresponding to the compressing force. When the compressing force has been surmounted, the gripping arms 7 and 8 and remaining portions of the appliance assume the positions illustrated in Figure 2, with the rubber-covered arms 7a and 8b exercising a light clamping action on the pipe wall.

In continued raising of the bucket 2, the pipe 9 is lifted by the arm 8b, it and the arm 7a still keeping the positions illustrated in Figure 2, and are pressed against the pipe wall by a force corresponding to the weight of the pipe. This is important, since a large clamping force is required to retain heavy pipes, and since smaller and more frangible pipes must not be subjected to clamping forces so large that they break. To improve retention of the pipe, the arm 7a should be somewhat inclined, so that it engages against the pipe in the area where the flange 9a merges into the cylindrical pipe wall. The rubber cladding on the arms 7a and 8b increases the friction between these and the pipe, thereby improving retention, as well as preventing the pipe from being damaged.

The bucket 2 is then swung in the horizontal plane to a position above the trench, and the bucket lowered into the trench such that the gripped pipe will be in line with pipes previously laid in the trench. The bucket is then moved forwards (to the right in Figure 2) so that the righthand end of the pipe is inserted in a pipe the same as the pipe 9. After the pipe 9 has been inserted in the previously laid pipe, the bucket 2 is lowered, for separating the arms 7a and 8b from each other and releasing their grip on the pipe wall. If the pipe 9 is to be thrust further into the previously laid pipe, the bucket can be manoeuvered so that the rubber cladding on the arm 8a presses the flange 9a to the right.

The appliance 1 is now removed from the pipe 9 and can be used to lay a further pipe in the trench, or it can be uncoupled from the bucket by opening the gripping means 3 and laid on the ground adjacent the trench for use when one or more new pipes are to be laid in a further portion of the trench excavated by the bucket.

## Claims

1. A pipelaying appliance, connected to a raisable and lowerable apparatus such as an excavator or a crane, and including a gripping means for removable engagement with a pipe, said means comprising a first member (8) projecting into the pipe (9) and an opposing second member (7) on the outside of the pipe, the members (7,8) being movable to and from each other and connected to the appliance (1) so that the clamping force provided by the members on the wall of the pipe will be proportional to the weight of the pipe carried by said appliance, characterized in that the first member (8) is L-shaped with a substantially horizontal arm (8b) engaging with the pipe and a substantially vertical arm (8a) parallel to a third member (4) on the appliance (1), said third member (4) being connected to the raisable and lowerable apparatus (2) and movably connected to the arm (8a) via a link (6) and a portion of the second member (7) parallel to said link (6), and in that a spring means (10) exerts a force on both members (7,8) for keeping them in an open position when they are not in engagement with the pipe (9).

2. Appliance as claimed in claim 1, characterized in that the spring means (10) acts between the first member (8) and the third member (4).

3. Appliance as claimed in claim 1, characterized in that the portions (7a,8b) engaging with the pipe (9) of the first and second members (7,8) are clad with elastic material.

4. Appliance as claimed in any one of claims 1—3, characterized by the third member (4) being removably gripped by a gripping means (3) mounted on an excavator bucket (2) of the raisable and lowerable apparatus and remotely controlled by the excavator operator, said third member being formed so that said appliance may be set to assume one of a variable number of positions in relation to said excavator bucket.

5. Appliance as claimed in claim 4, characterized in that said third member comprises a rod or bar (4) to be gripped by the gripping means (3) independent of how the bar or rod is turned round its longitudinal axis.

## Patentansprüche

1. Rohrverlegegerät, das mit einer heb- und senkbaren Einrichtung, z.B. einem Bagger oder Kran, verbunden ist und eine Greifvorrichtung zum lösbaren Eingriff mit einem Rohr aufweist, welche Greifvorrichtung ein erstes, in das Rohr (9) hineinragendes Organ (8) und ein gegenüberliegendes zweites Organ (7) an der Außenseite des Rohres umfaßt, wobei die Organe (7, 8) gegen und von einander bewegbar und am Gerät (1) befestigt sind, so daß die von den Organen auf die Rohrwandung ausgeübte Klemmkraft proportional zum Gewicht des von dem genannten Gerät getragenen Rohres ist, dadurch gekennzeichnet, daß das erste Organ (8) L-förmig mit einem im wesentlichen horizontalen, am Rohr angreifenden Arm (8b) und einem in wesentlichen vertikalen, parallel zu einem dritten Organ (4) des Gerätes (1) verlaufenden Arm (8a) ausgebildet ist, wobei dieses dritte Organ (4) mit der hebund senkbaren Einrichtung (2) verbunden ist und über ein Gelenk (6) sowie einen parallel zu diesem Gelenk (6) verlaufenden Abschnitt des zweiten Organs (7) mit dem Arm (8a) bewegbar verbunden ist, und daß ein Federorgan (10) auf beide Organe (7, 8) eine Kraft ausübt, die sie in einer offenen Stellung hält, wenn sie nicht mit dem Rohr (9) in Eingriff stehen.

2. Gerät nach Patentanspruch 1, dadurch gekennzeichnet, daß das Federorgan (10) zwischen dem ersten Organ (8) und dem dritten Organ (4) wirkt.

3. Gerät nach Patentanspruch 1, dadurch gekennzeichnet, daß die am Rohr (9) angreifenden Abschnitte (7a, 8b) des ersten und zweiten Organes (7,8) mit elastischem Material belegt sind.

4. Gerät nach einem der Patentansprüche 1 bis 3, dadurch gekennzeichnet, daß das dritte Organ (4) von einem Greiforgan (3) lösbar festgehalten ist, da an einem Baggereimer (2) der heb- und senkbaren Einrichtung befestigt und durch den Baggerführer ferngesteuert ist, wobei das genannte dritte Organ so ausgebildet ist, daß das Gerät auf eine von mehreren Positionen in bezug auf den Baggereimer einstellbar ist.

5. Gerät nach Patentanspruch 4, dadurch gekennzeichnet, daß das dritte Organ eine Stange oder einen Balken (4) umfaßt, der durch das Greiforgan (3) greifbar ist, unabhängig davon, wie die Stange oder der Balken um ihre bzw. seine Längsachse gedreht wird.

### Revendications

1. Dispositif pour la pose des tuyaux relié à un appareil élévateur et abaisseur tel qu'un excavateur ou une grue et comprenant un moyen de serrage destiné à saisir un tuyau de façon amovible, ledit moyen comprenant une première pièce (8) qui pénètre dans le tuyau (9) et une seconde pièce opposée (7) sur l'extérieur du tuyau, les pièces (7,8) étant mobiles de façon à se rapprocher et à s'éloigner l'une de l'autre et étant reliées à l'appareil (1) afin que la force de serrage exercée par les pièces sur la paroi du tuyau soit proportionnelle au poids du tuyau porté par ledit dispositif, caractérisé en ce que la première pièce (8) est en forme de L avec un bras sensiblement horizontal (8b) qui s'emboîte sur le tuyau, et un bras sensiblement vertical (8a) parallèle à une troisième pièce (4) du dispositif (1), ladite troisième pièce (4) étant reliée à un appareil élévateur et abaisseur (2) et connectée de façon amovible au bras (8a) par une liaison (6) et une portion de la seconde pièce (7) parallèle à ladite liaison (6) et en ce qu'un moyen à ressort (10) exerce une force sur les deux pièces (7,8) pour les maintenir en position ouverte quand elles ne sont pas engagées avec le tuyau (9).

2. Dispositif selon la revendication 1, caractérisé en ce que le moyen à ressort (10) agit entre la première pièce (8) et la troisième pièce (4).

3. Dispositif selon la revendication 1, caractérisé en ce que les portions (7a,8b) s'engageant avec le tuyau (9) de la première et de la seconde pièces (7,8) sont garnies d'un matériau élastique.

4. Dispositif selon l'une quelconque des revendications 1 à 3, caractérisé en ce que la troisième pièce (4) est saisie de façon amovible par un moyen de saisie (3) monté sur un godet (2) d'excavateur de l'appareil élévateur et abaisseur et commandé à distance par l'opérateur de l'excavateur, ladite troisième pièce étant formée de façon que ledit dispositif puisse être réglé pour prendre un nombre variable de positions par rapport audit godet de l'excavateur.

5. Dispositif selon la revendication 4, caractérisé en ce que ladite troisième pièce comprend un tige ou barre (4) qui doit être saisie par le moyen de saisie (3) indépendamment de la façon dont la barre ou la tige est tournée par rapport à son axe longitudinal.

Fig.1

Fig.2

0 088 057

1